Europäisches Patentamt

European Patent Office

Office européen des brevets

(11) Veröffentlichungsnummer: **0 276 866**
A2

## (12) EUROPÄISCHE PATENTANMELDUNG

(21) Anmeldenummer: **88101273.6**

(22) Anmeldetag: **29.01.88**

(51) Int. Cl.⁴ **B29C 43/18** , B29C 43/52 , B29C 45/14 , B29D 31/00

(30) Priorität: **29.01.87 DE 3702589**

(43) Veröffentlichungstag der Anmeldung: **03.08.88 Patentblatt 88/31**

(84) Benannte Vertragsstaaten: **AT BE CH DE FR GB IT LI NL SE**

(71) Anmelder: **Diedrichs, Helmut W.**
**Greinstrasse 49**
**D-6100 Darmstadt(DE)**

(72) Erfinder: **Diedrichs, Helmut W.**
**Greinstrasse 49**
**D-6100 Darmstadt(DE)**

(74) Vertreter: **Katscher, Helmut, Dipl.-Ing.**
**Bismarckstrasse 29**
**D-6100 Darmstadt(DE)**

(54) **Verfahren und Vorrichtung zur Herstellung von Formpressteilen.**

(57) Dünnwandige starre Formpreßteile (12) werden mit einem gummielastischen Randstreifen versehen. Hierzu wird das Formpreßteil (12) an seinem Verbindungsrand (13) mittels eines Wärmestrahlers (14) auf seine Plastifizierungstemperatur erwärmt. Anschließend wird das Ausgangsmaterial für den elastischen Randstreifen in einen Formhohlraum (5) eines Formwerkzeugs (2) eingebracht und dort durch Schließen des Formwerkzeugs (2) zu dem elastischen Randstreifen geformt. Unter der Wirkung von Druck und Wärme entsteht eine innige Verbindung des elastischen Randstreifens zu dem vorher plastifizierten Verbindungsrand (13).

FIG.1

EP 0 276 866 A2

## Verfahren und Vorrichtung zur Herstellung von Formpreßteilen

Die Erfindung betrifft ein Verfahren zur Herstellung von im wesentlichen starren, dünnwandigen thermoplastischen Formpreßteilen, die an mindestens einem Verbindungsrand mit einem gummielastischem Randstreifen, insbesondere einer Dichtlippe o.dgl. verbunden sind, wobei das starre Formpreßteil so in ein Formwerkzeug eingelegt wird, daß sein Verbindungsrand in einen Formhohlraum ragt, in den das Ausgangsmaterial für den gummielastischen Randstreifen eingebracht und plastifiziert wird.

Ausführungsbeispiele für derartige Formpreßteile sind Verkleidungs-und/oder Luftleitelemente für Fahrzeuge. Beispielsweise handelt es sich im Kraftfahrzeugbau um die Radkapselung, Luftleitteile und Motorkapselung. Daneben gibt es zahlreiche andere Anwendungsgebiete, in denen es insbesondere aus Gründen der Herstellungskosten erwünscht ist, ein starres, dünnwandiges Werkstück mit einem vorzugsweise zur Abdichtung dienenden elastischen Teil zu verbinden, das in den meisten Fällen einen geraden oder geformten Randstreifen oder eine Dichtlippe bildet. Das starre Werkstück kann hierbei auch dazu bestimmt sein, in erster Linie zur Befestigung des elastischen Teils zu dienen.

In allen Fällen besteht das Problem darin, eine innige Verbindung zwischen dem im wesentlichen starren Formpreßteil und dem elastischen Randstreifen herzustellen.

Bei einem bekannten Verfahren zur Herstellung derartiger zusammengesetzter Formpreßteile wird mit zwei Extrudern Kunststoff in ein Formwerkzeug gespritzt. Dadurch wird ein dünnwandiges, im wesentlichen flächiges Formteil hergestellt, das aus zwei unterschiedlichen Kunststoffen besteht. Die Verbindung der beiden Kunststoffe erfolgt durch die im eingespritzten Kunststoff enthaltene Wärmeund Druckenergie. Die beiden Kunststoffe verbinden sich an ihrer Berührungsstelle.

So wird zum Beispiel an ein aus Polypropylen bestehendes Spritzteil eine Dichtlippe aus weichem Polypropylen oder Äthylen-Propylen-Terpolymer (EPDM) oder ähnlichen Werkstoffen angeformt. Die Verbindungslinie der beiden Kunststoffe ist in den meistaen Fällen nicht scharf abgrenzbar. Die erforderlichen Werkzeugkosten sind verhältnismäßig hoch. Das bekannte Verfahren ist nur auf extrudierfähige Kunststoffe eingeschränkt. Für die Herstellung großer Formteile werden sehr große und damit teure Spritzgießmaschinen benötigt.

Aus diesen Gründen werden in der Praxis Dichtlippen und ähnlich weiche Randstreifen häufig an die starren Formpreßteile angeklebt, angenietet, angeschweißt oder durch formschlüssige Verbindungen angebracht. Hierfür müssen die beiden miteinander zu verbindenden Teile zunächst getrennt hergestellt und anschließend verbunden werden. Der hierzu erforderliche Arbeitsaufwand ist verhältnismäßig hoch. Beim Anbringen von Dichtlippen durch Kleben ergeben sich in der Praxis häufig Probleme, insbesondere bei aus Polypropylen bestehenden Formpreßteilen. Die Dichtlippen sind daher nur umständlich und kostenaufwendig anzubringen.

Zur Überwindung dieser Schwierigkeiten ist bei einem bekannten Verfahren (DE-OS 35 11 954) vorgesehen, sowohl das Ausgangsmaterial für das Formpreßteil, als auch das Ausgangsmaterial für den elastischen Randstreifen gemeinsam in ein Formwerkzeug einzubringen und dort unter Druck- und Wärmeeinwirkung gleichzeitig zu plastifizieren. Während die beiden Teile geformt werden, werden sie an ihren Berührungskanten miteinander verschweißt.

Um bei dem bekannten Verfahren eine saubere Verbindungsnaht zu erhalten, müssen besondere Maßnahmen am Formwerkzeug vorgesehen werden, beispielsweise eine bewegbar Sperrleiste, die erst dann aus dem Formhohlraum zurückgezogen wird, wenn die beiden Teile weitgehend vollständig geformt sind.

Vor allem bei sehr großen herzustellenden Formpreßteilen besteht bei dem bekannten Verfahren ein Nachteil darin, daß das Formwerkzeug sehr groß sein muß, da es den Abmessungen des herzustellenden Preßteils angepaßt sein muß. Die dadurch entstehenden Werkzeugkosten sind verhältnismäßig hoch.

Diese Schwierigkeit wird bei einem bekannten Verfahren der eingangs genannten Gattung dadurch überwunden, daß die Dichtlippe oder ein ähnlicher elastischer Randstreifen nachträglich an das bereits geformte Formpreßteil angespritzt wird. Da die Verbindung dieser beiden Teile hierbei formschlüssig ist, müssen an dem starren Formpreßteil Löcher vorgesehen werden, in die das Material des elastischen Randstreifens beim Spritzvorgang einfließt. Für diese formschlüssige Verbindung ist es aber erforderlich, daß das Material des elastischen Randstreifens an der Verbindungsstelle einen Wulst bildet, dessen Dicke größer als die des starren Formpreßteils ist. Ein solcher Wulst ist bei vielen Anwendungsfällen unerwünscht. Außerdem ist die Festigkeit solcher formschlüssiger Verbindungen geringer als die des angrenzenden Materials.

Aufgabe der Erfindung ist es daher, ein Verfahren der eingangs genannten Gattung zu schaffen, das auch bei großen Formpreßteilen die Herstellung einer festen und innigen Verbindung mit einem elastischen Randstreifen ermöglicht, ohne daß hierfür sehr große Werkzeuge erforderlich sind und ohne daß an der Verbindungsstelle ein Wulst entsteht.

Diese Aufgabe wird erfindungsgemäß dadurch gelöst, daß nur der Verbindungsrand des starren Formpreßteils auf seine Plastifizierungstemperatur erwärmt und anschließend mit dem plastifizierten Ausgangsmaterial für den Randstreifen unter Einwirkung von Wärme und Druck verbunden wird.

Dadurch wird eine innige Verbindung der beiden Teile nach Art einer Schweißverbindung geschaffen, ohne daß eine Materialverdickung im Verbindungsbereich erforderlich ist. Das verwendete Werkzeug muß nur so groß sein, daß es den Verbindungsrand des starren Formpreßteils und den Randstreifen aufnimmt. Deshalb können auch an sehr große Formpreßteile Randstreifen mittels Werkzeugen angeformt werden, die wesentlich kleiner als das gesamte Formpreßteil sind. Die Erwärmung des starren Formpreßteils erfolgt gezielt und nur so weit, daß der Verbindungsrand plastisch wird. An diesen Verbindungsrand wird das Ausgangsmaterial für den Randstreifen angespritzt oder angepreßt.

Gemäß einer bevorzugten Ausführungsform der Erfindung ist vorgesehen, daß das Ausgangsmaterial für den Randstreifen vorgewärmt und in einen Formhohlraum eingebracht wird, in den der vorher erwärmte Verbindungsrand des starren Formpreßteils ragt, und daß das Ausgangsmaterial durch Schließen des Formhohlraums unter Druck zu dem Randstreifen geformt und mit dem Verbindungsrand verbunden wird.

Stattdessen ist es gemäß einer anderen bevorzugten Ausführungsform der Erfindung auch möglich, das Ausgangsmaterial für den Randstreifen in vorgewärmtem plastifizierten Zustand in einen geschlossenen Formhohlraum einzuspritzen, in den der vorher erwärmte Vebindungsrand des starren Formpreßteils ragt.

Die Erfindung betrifft außerdem eine Vorrichtung zur Durchführung des Verfahrens. Ausgehend von einer bekannten Vorrichtung mit einem Formwerkzeug, in dem zwischen einem Werkzeugoberteil und einem Werkzeugunterteil, die gegeneinander bewegbar sind, ein schließbarer Formhohlraum gebildet ist, ist die erfindungsgemäße Vorrichtung gemäß einer ersten Ausführungsform dadurch gekennzeichnet, daß sich an einer Seite des Formhohlraums eine Werstückspannvorrichtung anschließt, die zwei gegeneinander bewegbare Formbacken aufweist, die zwischen sich einen nach außen offenen Formspalt bilden, der in seiner Querschnittsgestalt dem an den Verbindungsrand anschließenden Randbereich des starren Formpreßteils angepaßt ist.

Gemäß einer anderen Ausführungsform der erfindungsgemäßen Vorrichtung ist vorgesehen, daß der Formhohlraum in einen nach außen offenen Formspalt übergeht, der in seiner Querschnittsgestalt dem an den Verbindungsrand anschließenden Randbereich des starren Formpreßteils angepaßt ist, und daß in den Formhohlraum mindestens ein Einspritzkanal mündet, der mit einem Spritzextruder verbunden ist.

Weitere vorteilhafte Ausgestaltungen des Erfindungsgedankens sind Gegenstand weiterer Unteransprüche.

Die Erfindung wird nachfolgend an Ausführungsbeispielen näher erläutert, die in der Zeichnung dargestellt sind. Es zeigt:

Fig. 1 eine Vorrichtung zur Verbindung eines Formpreßteils mit einem gummieleastischem Randstreifen in einem stark vereinfachten senkrechten Schnitt in der Stellung beim Anwärmen des Verbindungsrandes,

Fig. 2 in einem Teilschnitt die Vorrichtung nach Fig. 1 nach dem Einbringen des Ausgangsmaterials für den Randstreifen,

Fig. 3 in einem Teilschnitt entsprechend der Fig. 2 die Vorrichtung im geschlossenen Zustand des Formwerkzeugs,

Fig. 4 in stark vereinfachter Darstellungsweise eine andere Vorrichtung zum Vorwärmen des Verbindungsrandes und

Fig. 5 in einem stark vereinfachten Schnitt ein Formwerkzeug zum Anformen des elastischen Randstreifens an das gemäß Fig. 4 vorgewärmte Formpreßteil.

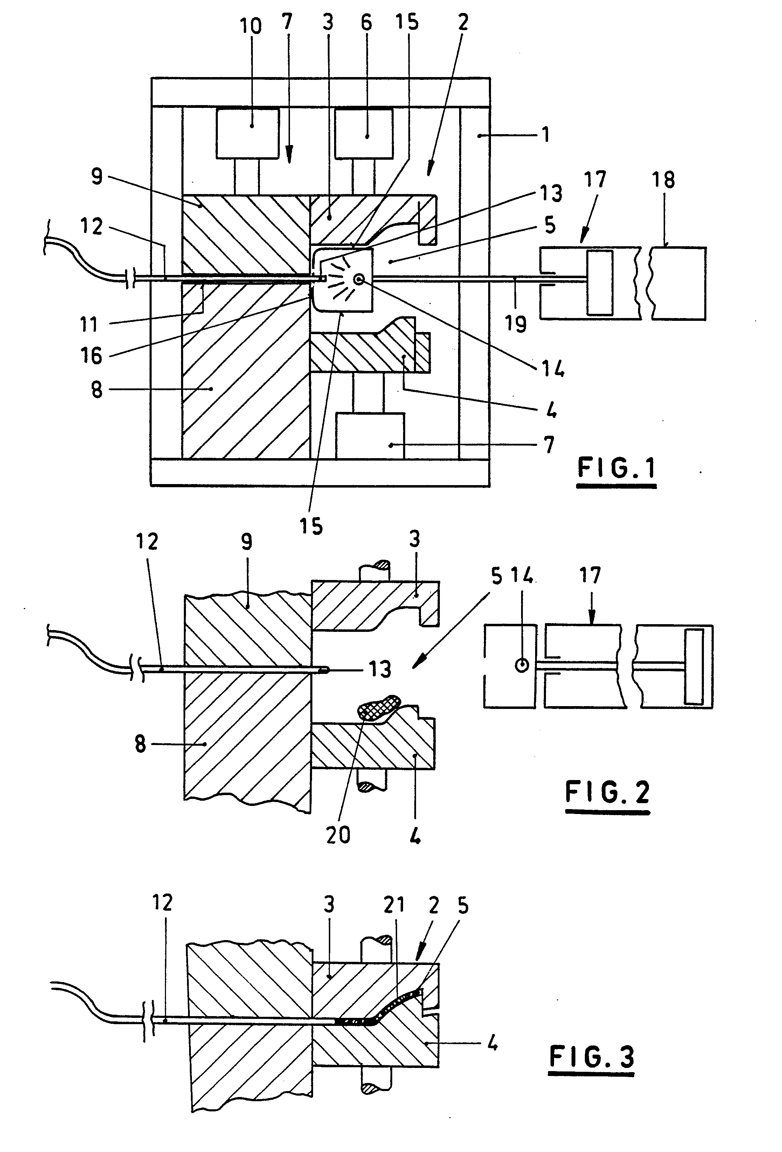

Die in Fig. 1 gezeigte Vorrichtung weist in einem Rahmen 1 ein Formwerkzeug 2 auf. Ein Werkzeugoberteil 3 und ein Werkzeugunterteil 4 bilden zwischen sich einen Formhohlraum 5. Das Werkzeugoberteil 3 und das Werkzeugunterteil 4 sind jeweils mittels eines Schließzylinders 6 bzw. 7 gegeneinander bewegbar.

Seitlich schließt sich an das Werkzeugoberteil 3 und das Werkzeugunterteil 4 dicht eine Werkstückspannvorrichtung 7 an, die aus einem im Gestell 1 feststehenden unteren Formbacken 8 und einem oberen Formbacken 9 besteht, der mittels eines Spannzylinders 10 angehoben und abgesenkt werden kann. In geschlossenem Zustand, der in Fig. 1 dargestellt ist, bilden die Formbacken 8, 9 zwischen sich einen nach außen offenen Formspalt 11, der so gestaltet ist, daß er ein bereits vorgefertigtes starres Formpreßteil 12 in dem Bereich aufnimmt, der sich an einen Verbindungsrand 13 des Formpreßteils anschließt, der in den Formhohlraum 5 ragt.

Ein Wärmestrahler 14, beispielsweise ein elektrischer Heizkörper, ist nach oben und unten durch Abschirmbleche 15 so abgeschirmt, daß nur ein schmaler Spalt 16 übrigbleibt, in den der Verbindungsrand 13 paßt. Der Wärmestrahler 14 ist mit einer Vorschubeinrichtung 17 verbunden, die beim dargestellten Ausführungsbeispiel einen druckmittelbetätigten Zylinder 18 aufweist, an dessen Kolbenstange 19 der Wärmestrahler 14 angebracht ist.

Durch die Vorschubeinrichtung 17 kann der Wärmestrahler 14 in die in Fig. 1 dargestellte Stellung innerhalb des Formhohlraums 5 gebracht werden. Der Verbindungsrand 13 ragt in den Raum zwischen den Abschirmblechen 15 und wird dort durch den Wärmestrahler 14 auf seine Plastifizierungstemperatur erwärmt.

Danach wird das Ausgangsmaterial 20 für einen anzuformenden elastischen Randstreifen in den Formhohlraum 5 eingebracht, nachdem der Wärmestrahler 14 zurückgezogen wurde (Fig. 2).

Dann schließt sich das Formwerkzeug 2 durch Zusammenfahren des Werkzeugoberteils 3 und des Werkzeugunterteils 4, wobei in dem Formhohlraum 5 ein elastischer Randstreifen 21 geformt wird. Wie dargestellt, handelt es sich bei dem Formwerkzeug 2 um ein Tauchkantenwerkzeug, d. h. vor Beendigung des Formhubes wird der Formhohlraum 5 geschlossen, so daß darin ein Druckanstieg stattfindet. Unter der Wirkung der Temperatur des vorgewärmten Materials und der Druckwirkung erfolgt eine innige Verbindung zwischen dem Randstreifen 21 und dem Formpreßteil 12 nach Art einer Schweißverbindung. Beide Teile bestehen aus thermoplastischem Material. Beispielsweise besteht das starre Formpreßteil 12 aus Polypropylen und der als Dichtlippe angeformte elastische Randstreifen 21 besteht aus weicherem Polypropylen oder EPDM.

Zweckmäßigerweise werden an dem an das Formwerkzeug 2 angrenzenden Rand der Spannbacken 8 und 9 im Werkstückbereich Silikonschnurdichtungen oder ähnliche Abschottungen vorgesehen, die eine Abdichtung bewirken. Dadurch wird verhindert, daß das Ausgangsmaterial 20 des Randstreifens 21 beim Formvorgang in Form einer Haut über den Verbindungsrand des Formpreßteils 12 fließen kann.

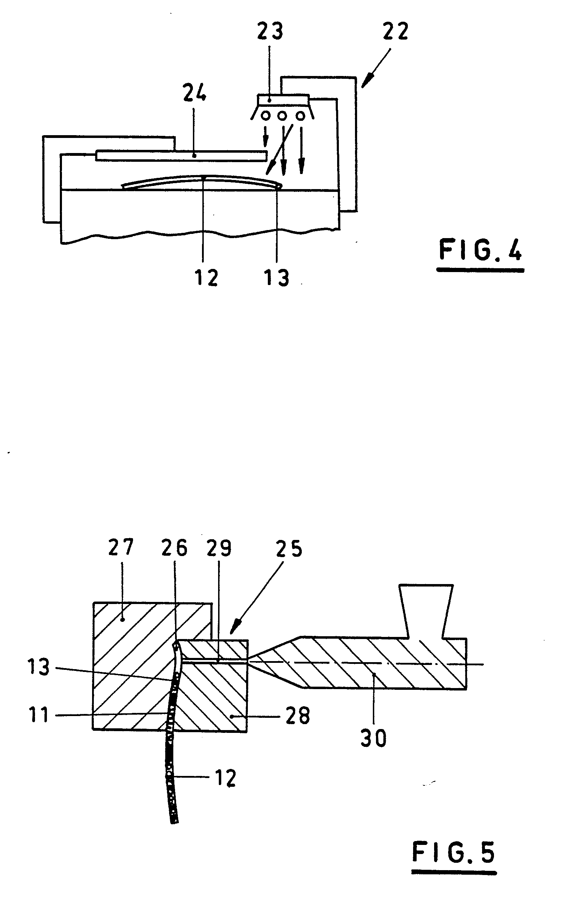

In den Fig. 4 und 5 ist eine andere Vorrichtung zur Durchführung eines erfindungsgemäßen Verfahrens gezeigt. Das starre Formpreßteil 12 wird zunächst in eine Vorwärmeinrichtung 22 (Fig. 4) gebracht. Ein Wärmestrahler 23, der beispielsweise wieder ein elektrischer Heizstrahler sein kann, bringt den Verbindungsrand 13 auf die gewünschte Plastifizierungstemperatur, wobei eine Blende 24 die übrigen Bereiche des Formpreßteils 12 abschirmt.

Das so vorbereitete Formpreßteil 12 wird rasch in das in Fig. 5 schematische dargestellte Formwerkzeug 25 gebracht. Der vorgewärmte Verbindungsrand 13 ragt in einen Formhohlraum 26, der zwischen Formwerkzeughälften 27 und 28 gebildet ist, die relativ zueinander bewegbar sind. Die Formhälften 27 und 28 bilden auch hierbei zwischen sich einen nach außen offenen Formspalt 11, der in seiner Querschnittsgestalt dem an dem Verbindungsrand 13 anschließenden Randbereich des starren Formpreßteils 12 angepaßt ist.

In den Formhohlraum 26 mündet ein Einspritzkanal 29, der mit einem herkömmlichen, in Fig. 5 nur schematisch angedeuteten Spritzextruder 30 verbunden ist. Das Ausgangsmatrial für den anzuformenden Randstreifen wird vom Extruder 30 durch den Einspritzkanal 29 in den Formhohlraum 26 gespritzt und verbindet sich dabei mit dem dort befindlichen, vorgewärmten Verbindungsrand 13 unter der Einwirkung des Einspritzdrucks.

Es hat sich gezeigt, daß die erforderliche Plastifizierungstemperatur des Formpreßteils 12 im Bereich seines Verbindungsrandes 13 dadurch erreicht werden kann, daß die Erwärmung während einer durch eine Zeituhr vorgegebenen Dauer erfolgt. Eine Temperaturmessung und/oder Regelung ist nicht erforderlich. Es versteht sich, daß das Einbringen der vorgewärmten Materialien in das Formwerkzeug zügig erfolgen muß, um eine unerwünschte Temperaturabsenkung zu vermeiden. Vorzugsweise sind die Spritzwerkzeuge 2 bzw. 25 und gegebenenfalls auch die Spannvorrichtung 7 gekühlt, um ein rasches Erstarren des fertiggeformten Werkstücks zu erreichen.

Das beschriebene Verfahren kann nicht nur am Außenrand, sondern auch am Rand von Öffnungen oder Fenstern im starren Formpreßteil 12 angewandt werden, wobei der Ranstreifen 13 auch die Öffnung oder das Fenster des starren Formpreßteils ganz oder teilweise überdecken kann.

**Ansprüche**

1. Verfahren zur Herstellung von im wesentlichen starren, dünnwandigen thermoplastischen Formpreßteilen, die an mindestens einem Verbindungsrand mit einem gummielastischem Randstreifen, insbesondere einer Dichtlippe o.dgl. verbunden sind, wobei das starre Formpreßteil so in ein Formwerkzeug eingelegt wird, daß sein Verbindungsrand in einen Formhohlraum ragt, in den das Ausgangsmaterial für den gummielastischen Randstreifen eingebracht und plastifiziert wird, dadurch gekennzeichnet, daß nur der Verbindungsrand des starren Formpreßteils auf seine Plastifizierungstemperatur erwärmt und anschließend mit dem plastifizierten Ausgangsmaterial für die Randstreifen unter Einwirkung von Wärme und Druck verbunden wird.

2. Verfahren nach Anspruch 1, dadurch gekennzeichnet, daß das Ausgangsmaterial für den Randstreifen vorgewärmt und in einen Formhohlraum eingebracht wird, in den der vorher erwärmte Verbindungsand des starren Formpreßteils ragt und daß das Ausgangsmaterial durch Schließen des Formhohlraums unter Druck zu dem Randstreifen geformt und mit dem Verbindungsrand verbunden wird.

3. Verfahren nach Anspruch 1, dadurch gekennzeichnet, daß das Ausgangsmaterial für den Randstreifen in vorgewärmtem plastifizierten Zustand in einen geschlossenen Formhohlraum eingespritzt wird, in den der vorher erwärmte Verbindungsrand des starren Formpreßteils ragt.

4. Verfahren nach Anspruch 2, dadurch gekennzeichnet, daß der Verbindungsrand des starren Formpreßteils nach dem Einbringen in den Formhohlraum dort durch Wärmestrahlung erwärmt wird.

5. Verfahren nach Ansprüchen 2 oder 3, dadurch gekennzeichnet, daß der Verbindungsrand des starren Formpreßteils vor dem Einbringen in den Formhohlraum durch Wärmestrahlung erwärmt wird, wobei der übrige Bereich des Formpreßteils abgeschirmt ist.

6. Vorrichtung zur Durchführung des Verfahrens nach Anspruch 2 mit einem Formwerkzeug, in dem zwischen einem Werkzeugoberteil und einem Werkzeugunterteil, die gegeneinander bewegbar sind, ein schließbarer Formhohlraum gebildet ist, dadurch gekennzeichnet, daß sich an einer Seite des Formhohlraums (5) eine Werkstückspannvorrichtung (7) anschließt, die zwei gegeneinander bewegbare Formbacken (8,9) aufweist, die zwischen sich einen nach außen offenen Formspalt (11) bilden, der in seiner Querschnittsgestalt dem an den Verbindungsrand (13) anschließenden Randbereich des starren Formpreßteils (12) anagepaßt ist.

7.Vorrichtung nach Anspruch 6, dadurch gekennzeichnet, daß ein mit oberen und unteren Abschirmblechen (15) versehener Wärmestrahler (14) mittels einer Vorschubeinrichtung (17) zwischen einer Ruhestellung außerhalb des Formhohlraums (5) und einer Heizstellung verschiebbar ist, in der sich der Wärmestrahler (14) in unmittelbarer Nähe der Werkstückspannvorrichtung (7) befindet.

8. Vorrichtung zur Durchführung des Verfahrens nach Anspruch 3, mit einem Formwerkzeug, mit dem zwischen einem Werkzeugoberteil und einem Werkzeugunterteil, die gegeneinander bewegbar sind, ein schließbarer Formhohlraum gebildet ist, dadurch gekennzeichnet, daß der Formhohlraum (26) in einen nach außen offenen Formspalt (11) übergeht, der in seiner Querschnittsgestalt dem an den Verbindungsrand (13) anschließenden Randbereich des starren Formpreßteils (12) angepaßt ist und daß in den Formhohlraum (26) mindestens ein Einspritzkanal (29) mündet, der mit einem Spritzextruder (30) verbunden ist.

0 276 866

FIG.1

FIG.2

FIG.3

**23**  **22**

**24**

**FIG. 4**

**12**  **13**

**27**  **26**  **29**  **25**

**13**

**11**

**28**

**30**

**12**

**FIG. 5**